(19) Europäisches Patentamt / European Patent Office / Office européen des brevets

(11) **EP 1 746 521 A1**

(12) **DEMANDE DE BREVET EUROPEEN**

(43) Date de publication:
**24.01.2007 Bulletin 2007/04**

(51) Int Cl.:
***G06F 17/30*** *(2006.01)*

(21) Numéro de dépôt: **06291193.8**

(22) Date de dépôt: **20.07.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **22.07.2005 FR 0552278**

(71) Demandeur: **FRANCE TELECOM**
**75015 Paris (FR)**

(72) Inventeurs:
• **Laugier, Alexandre**
  **06440 Peille (FR)**
• **Raymond, Stéphane**
  **06600 Antibes (FR)**

(54) **Procédé de classement d'un ensemble de documents électroniques du type pouvant contenir des liens hypertextes vers d'autres documents électroniques**

(57) Le procédé permet de sélectionner un nombre maximal prédéfini N de documents parmi un ensemble de documents. Un graphe G est constitué (50) à partir de l'ensemble de documents, chaque sommet du graphe G correspondant à un des documents dudit ensemble et chaque arête entre deux sommets du graphe indiquant la présence d'au moins un lien hypertexte entre les deux documents correspondant aux deux sommets considérés. Le procédé utilise les propriétés topologiques de ce graphe pour sélectionner un sous-ensemble de N documents. Il consiste à générer (220) un mineur $M_G$ du graphe G comprenant un nombre maximal prédéfini N de sommets par suppression d'au moins un sommet du graphe G, cette suppression visant à minimiser pour le nombre prédéfini N de sommets une distance prédéfinie entre le graphe G et le mineur $M_G$, cette distance mesurant la perturbation du voisinage des sommets du graphe G engendrée par la génération du mineur $M_G$.

**Fig. 1**

# EP 1 746 521 A1

## Description

L'invention se rapporte aux domaines des télécommunications et en particulier au domaine des moteurs de recherche pour la recherche de documents électroniques.

Plus précisément l'invention concerne un procédé de classification informatique d'un ensemble de documents électroniques du type pouvant contenir des liens hypertextes vers d'autres documents électroniques. Un tel ensemble résulte par exemple d'une recherche effectuée par un utilisateur au moyen d'un moteur de recherche sur un réseau de type Intsrnet, les documents électroniques étant dans ce cas des pages Web (abréviation de "World Wide Web") accessibles localement via un support local de stockage ou à distance via le réseau.

Les moteurs de recherches utilisent plusieurs techniques pour le classement ou le tri de pages issues d'une recherche. Parmi les techniques connues d'exploration d'un ensemble de pages Web, certaines reposent sur la sémantique, une page étant classée comme étant d'autant plus pertinente qu'elle comporte un grand nombre d'occurrences du ou des mots recherchés. Ces techniques sont sensibles à une pratique, connue sous la dénomination anglo-saxonne de "spamming", visant à faire figurer dans une page donnée un très grand nombre de fois les mots utilisés couramment par les internautes dans leur requête de recherche, ce qui a pour effet de faire apparaître fréquemment la page comme pertinente.

D'autres techniques se basent sur la structure topologique du Web. Ces techniques tiennent compte à la fois des liens existants entre les pages considérées et des propriétés des pages elles mêmes, telles que l'appartenance d'une page à un domaine ou à un sous domaine réseau du Web. Ces techniques sont généralement basées sur une représentation par graphe des pages à traiter. Elles sont appropriées à la classification de pages répondant à des propriétés topologiques données dans le graphe. Ces techniques sont sensibles à une variante de la pratique de "spamming" visant à référencer un grand nombre de fois une page donnée, ce qui a pour effet de fausser localement les caractéristiques topologiques du graphe du Web.

Certaines des techniques exploitant la structure topologique du Web consistent à opérer une classification des pages Web par attribution aux différentes pages d'un rang qui est fonction des relations d'une page avec les autres.

Un exemple d'une telle méthode, connu sous le terme anglais "PageRank", est utilisé dans la mise en oeuvre du moteur de recherche Google™ et est décrit dans le document : "The PageRank Citation Ranking : Bringing Order on the Web", de L. Page, S. Brin, R. Motwani et T. Winograd ; Technical Report, Computer Science Département, Stanford University, 1998.

La méthode *PageRank* ordonne les pages en fonction de leur visibilité sur le Web. Dans cette méthode, une navigation aléatoire de page en page sur le Web en suivant les liens hypertextes, est simulée. Cette navigation correspond à celle provoquée par un utilisateur accédant au Web lorsque ce dernier active aléatoirement un des liens hypertextes se trouvant dans une page visualisée, afin d'accéder à une autre page. Cette méthode procède à une analyse probabiliste de cette navigation simulée afin de déterminer la probabilité pour l'utilisateur de se retrouver sur une page donnée lors d'une telle navigation aléatoire de page en page. Le rang d'une page est d'autant plus élevé que le nombre de fois où cette page est citée par d'autres pages est élevé.

Une telle méthode fournit un rang de classement qui n'est pas forcément pertinent vis-à-vis de la recherche effectuée par un utilisateur, les pages les mieux classées (de rang le plus élevé) n'étant pas forcément les pages correspondant le mieux à l'attente de l'utilisateur.

En outre, cette méthode ne permet pas d'identifier dans l'ensemble des documents des communautés thématiques ou communautés d'intérêt, susceptibles d'aiguiller l'utilisateur plus rapidement vers une page intéressante, ni même d'effectuer une classification des documents trouvés par communauté thématique.

L'invention a ainsi pour objectif notamment de résoudre les inconvénients susmentionnés de l'état de technique en proposant une technique de classement de documents électroniques, par exemples des pages Web, qui permette en particulier, de s'affranchir des problèmes liés au *spamming,* qui soit applicable à un grand ensemble de documents tout en étant rapide dans sa mise en oeuvre, et qui permette d'obtenir une classification des documents, non pas par attribution de rang, mais par constitution de communautés, notamment de communautés thématiques, au sein de l'ensemble initial de documents.

Selon l'invention, cet objectif est atteint grâce à un procédé de classement informatique d'un ensemble de documents électroniques du type pouvant contenir des liens hypertextes vers d'autres documents électroniques, le procédé étant mis en oeuvre par des moyens informatiques et comprenant les étapes consistant à :

a) analyser l'ensemble des documents électroniques afin de détecter la présence de liens hypertexte et de constituer un graphe G représentant cet ensemble de documents, chaque sommet du graphe correspondant à un des documents de l'ensemble, la présence d'une arête entre deux sommets du graphe indiquant la présence d'au moins un lien hypertexte entre les deux documents correspondant aux deux sommets;
b) obtenir un mineur $M_G$ du graphe G comprenant un nombre maximal prédéfini N de sommets par suppression d'au moins un sommet du graphe G, cette suppression visant à minimiser pour le nombre prédéfini N de sommets une distance prédéfinie entre le graphe G et le mineur M$_G$, cette distance mesurant la perturbation du voisinage des sommets du graphe G engendrée par la génération du mineur M$_G$,
c) déterminer le sous-ensemble de l'ensemble de documents, qui correspond aux sommets du mineur M$_G$ obtenu.

La mise en oeuvre d'un procédé selon l'invention permet ainsi la détermination de communautés de documents uniquement à partir des liens existant entre ces documents et non pas à partir de leur contenu sémantique. De cette manière, on peut notamment s'affranchir des problèmes de *spamming* liés à la prise en compte de la sémantique dans la recherche de documents.

En outre, le mineur est déterminé de manière à minimiser la perturbation engendrée sur le graphe de départ par la procédure de génération de mineur. En ce sens, le sous-ensemble de documents obtenu, correspondant aux sommets du mineur déterminé, est celui qui, pour une taille de mineur donnée, est le plus représentatif - le plus proche au sens de la distance choisie — de l'ensemble de documents de départ.

Par aüleurs, le procédé selon l'invention offre l'avantage, lorsqu'il est appliqué aux pages trouvées au moyen d'un moteur de recherche de pages Web, de présenter à l'utilisateur un résultat comprenant au moins un sous-ensemble de pages ou une communauté de pages. Dès lors, un tel procédé autorise un classement de l'ensemble des documents en communautés d'intérêt ou communautés thématiques, ces communautés étant représentatives de l'ensemble des pages trouvées en réponse à une requête de recherche. A partir des communautés de pages extraites, un utilisateur est en mesure d'identifier rapidement et simplement les pages qui l'intéressent le plus.

Du fait que l'on détermine un mineur qui minimise la perturbation engendrée par la procédure de génération de mineur, le procédé selon l'invention tend à conserver tout ensemble de sommets pointant essentiellement les uns sur les autres et tend à supprimer les sommets isolés dans le graphe. En effet, la suppression de sommets isolés engendre une faible perturbation alors que ce n'est pas le cas pour un sommet comportant un nombre importants de liens vers d'autres sommets.

En conséquence, le procédé selon l'invention permet de déterminer pour un ensemble de documents au moins une communauté, cette communauté étant caractérisée par le fait que les documents qui la composent pointent essentiellement vers les autres documents de la communauté. On peut constater que lorsqu'une communauté présente une telle caractéristique, il s'agit le plus souvent d'une communauté thématique. L'invention tire avantageusement partie de cette constatation pour la constitution des communautés.

Le procédé selon l'invention permet enfin de fixer une taille maximum pour les sous-ensembles recherchés, ce qui signifie que le nombre de pages constituant la réponse à une interrogation du Web peut être maîtrisé.

De plus si on applique la méthode, non plus à un graphe quelconque de pages Web, mais à un graphe de domaines (ou graphe de pages d'accueil de domaines), il est possible de classer les domaines en fonction de leur site d'hébergement. En effet, la présence d'un site d'hébergement se traduit par la présence de liens de ce site vers les pages d'accueil des domaines et la procédure de recherche de mineur conserve de telles structures de liens.

Selon une caractéristique particulière de l'invention, l'étape b) inclut une étape de traitement du graphe G par un processus itératif, chaque itération consistant à générer un mineur M$_{i+1}$ du mineur courant M$_i$ par suppression dans le mineur courant M$_i$ d'au moins un sommet v satisfaisant à un critère prédéfini relatif à la comparaison de son voisinage dans le mineur courant M$_i$ et de son voisinage dans le graphe de départ G, le processus itératif prenant fin lorsque le nombre de sommets du mineur courant M$_i$ devient inférieur ou égal à N.

Grâce à un tel processus itératif opérant uniquement sur le voisinage des sommets du graphe, et réduisant progressivement le nombre de sommets dans le graphe courant, il est ainsi possible de maîtriser simplement le nombre de sommets retenu dans le mineur final.

Selon un mode de réalisation préféré de l'invention, le critère précité est satisfait pour un sommet v donné si le vecteur caractéristique $A_{M,}(v)$ du voisinage du sommet v dans le mineur courant M$_i$ et le vecteur caractéristique $A_G(v)$ du voisinage du sommet v dans le graphe de départ G, vérifient la relation suivante:

$$\left| A_{M_i}(v) \right| \leq \beta \left| A_G(v) - A_{M_i}(v) \right|$$

où β est un paramètre de convergence.

Cette sélection des sommets à conserver, effectuée l'aide d'un tel critère, est simple à mettre en oeuvre et la rapidité de la convergence du processus itératif est ainsi contrôlée au moyen d'un unique paramètre de convergence β.

Selon une mise en oeuvre particulière de l'invention, le processus itératif précité est appliqué au graphe G après exécution d'une étape consistant à supprimer dudit graphe G les sommets ayant un nombre de voisins inférieur à un seuil α prédéfini.

Cette étape préalable permet ainsi de réduire le graphe G de départ à un mineur initial permettant de converger le plus rapidement possible vers un mineur tel que la distance prédéfinie entre le graphe G et le mineur M$_G$ soit aussi petite que possible.

Selon une réalisation préférée de l'invention comprend en outre les étapes qui consistent en outre à,

- traiter le graphe G par un deuxième processus itératif, chaque itération consistant à générer un graphe $G_{i+1}$ à partir du graphe courant $G_i$ par suppression dans le graphe courant $G_i$ de tout sommet qui appartient au mineur $M_{Gi}$ obtenu par application de l'étape b) au graphe $G_i$ et qui satisfait à un deuxième critère prédéfini concernant son voisinage dans ce mineur $M_i$, ce deuxième processus itératif prenant fin lorsque le graphe courant G, est vide ; et
- déterminer, pour chaque mineur $M_{Gi}$ obtenu, le sous-ensemble dudit ensemble de documents correspondant aux sommets de ce mineur.

De cette façon, on obtient une classification de tous les documents de l'ensemble de départ dans des sous-ensembles dont la réunion est égale à l'ensemble de départ. Dans une telle classification, chaque document appartient à au moins un sous-ensemble qui correspond chaque fois à un mineur $M_{Gi}$.

Avantageusement, le procédé selon l'invention comprend en outre les étapes consistant à déterminer, pour chaque sommet, le nombre de mineurs $M_{Gi}$ auquel il appartient, et effectuer un classement dudit ensemble de documents, le rang de classement d'un document étant fonction du nombre de mineurs obtenus comprenant le sommet correspondant au document considéré.

Ainsi, on dispose, en plus d'une possibilité de classification de l'ensemble des documents en sous-ensembles, d'une possibilité de classement des documents au moyen d'un rang de classement, le nombre de mineurs déterminé pour le sommet correspondant à un document, constituant le rang de classement du document.

Le procédé de classement selon l'invention permet avantageusement de s'affranchir des problèmes de "spamming" par multiplication des liens vers une un document donné, puisqu'un document référencé plusieurs fois n'appartiendra le plus souvent qu'à un seul mineur.

L'invention a également pour objet un programme d'ordinateur sur un support d'informations, ledit programme contenant des instructions adaptées à la mise en oeuvre des étapes d'un procédé selon l'invention tel que brièvement défini supra, lorsque ce programme est exécuté sur un ordinateur.

L'invention a également pour objet un dispositif informatique pour le classement d'un ensemble de documents électroniques du type pouvant contenir des liens hypertextes vers d'autres documents électroniques, le dispositif comprenant:

- des moyens pour analyser l'ensemble des documents afin de détecter la présence de liens hypertexte et de constituer un graphe G représentant ledit ensemble de documents, chaque sommet du graphe correspondant à un des documents dudit ensemble, la présence d'une arête entre deux sommets du graphe indiquant la présence d'au moins un lien hypertexte entre les deux documents correspondant auxdits deux sommets ;
- des moyens pour obtenir un mineur $M_G$ du graphe G comprenant un nombre maximal prédéfini N de sommets par suppression d'au moins un sommet du graphe G. ladite suppression visant à minimiser pour ledit nombre prédéfini N de sommets une distance prédéfinie entre ledit graphe G et ledit mineur $M_G$. ladite distance mesurant la perturbation du voisinage des sommets du graphe G engendrée par la génération du mineur $M_G$.
- des moyens pour déterminer le sous-ensemble dudit ensemble de documents, qui correspond aux sommets du mineur $M_G$ obtenu.

Selon une caractéristique du dispositif selon l'invention, celui-ci comprend des moyens pour la mise en oeuvre d'un procédé selon l'invention.

D'autres buts, caractéristiques et avantages de l'invention apparaîtront à travers la description qui va suivre, donnée uniquement à titre d'exemple non limitatif, et faite par référence aux dessins annexés sur lesquels:

- la figure 1 est un organigramme de la partie du procédé selon l'invention correspondant à la procédure de génération de mineur,
- les figures 2a à 2d sont des exemples de mineurs obtenus par la procédure de génération de mineur,
- la figure 3 est un organigramme d'un mode de réalisation du procédé selon l'invention, permettant la détermination d'un rang de classement.

Les différentes notions mathématiques relatives à la théorie des graphes et nécessaires à la compréhension de l'invention sont rappelées brièvement ci-après.

On note G=(V,E) un graphe dont l'ensemble des sommets est noté V et l'ensemble des arêtes entre sommets est noté E.

On appelle mineur $M_G$=(V',E') d'un graphe G=(V,E) tout sous-graphe induit qui peut être obtenu à partir du graphe G soit en supprimant un sommet et les arêtes qui y sont incidentes, soit en contractant une des arêtes du graphe G, les opérations de suppression de sommets ou de contraction d'arête pouvant être répétées itérativement.

La matrice d'adjacence $A_G$ d'un graphe G est définie comme étant une matrice carrée dont les lignes et les colonnes sont indexées par les sommets du graphe. Un élément $A_G(i,j)$ de la matrice d'adjacence vaut 1 si le sommet i est relié au sommet j par au moins une arête (dans ce cas i est dit voisin de j) et vaut 0 dans le cas contraire. Dans le cas où le graphe G considéré est non orienté, la matrice d'adjacence $A_G$ est symétrique.

La construction d'un mineur $M_G$ de G par suppression de sommet correspond à la suppression d'une colonne de la matrice d'adjacence $A_G$ ainsi que la ligne de même indice, cette opération de suppression pouvant être réitérée pour obtenir un mineur de taille fixée.

En variante, on peut déterminer pour le mineur $M_G$ une matrice d'adjacence $A_{MG}$ de mêmes dimensions que la matrice $A_G$ par mise à zéro des lignes et colonnes de la matrice $A_G$ qui correspondent aux sommets supprimés.

Une ligne de la matrice d'adjacence $A_G$ est le vecteur caractéristique $A_G(u)$ du voisinage dans le graphe G du sommet u par lequel cette ligne est indexée. Le nombre de voisins d'un sommet u du graphe est déterminé par exemple à partir de la matrice d'adjacence, en comptant le nombre de 1 du vecteur caractéristique du voisinage du sommet u.

On appelle distance de Hamming de deux vecteurs le nombre de coordonnées par lesquelles ils diffèrent. On peut ainsi définir la distance de Hamming $H(u_1,u_2)$ entre deux vecteurs caractéristiques du voisinage dans le graphe G=(V,E) de deux sommets $u_1$ et $u_2$ appartenant à V par la relation suivante:

$$H(u_1,u_2) = \left| A_G(u_1) - A_G(u_2) \right| = \sum_{v \in V} \left| A_G(u_1,v) - A_G(u_2,v) \right|.$$

On appelle diamètre d'un graphe la valeur en nombre d'arêtes du plus long des plus courts chemins joignant les paires de sommets de ce graphe.

Les principes sous-jacents au procédé selon l'invention vont maintenant être présentés. L'invention propose une méthode de classement d'un ensemble de documents ou pages par détermination de mineurs correspondants à des communautés de documents ou sous-ensembles de l'ensemble de documents de départ.

Dans la méthode proposée, l'ensemble de documents de départ est représenté sous la forme d'un graphe non orienté, chaque sommet du graphe correspondant à un des documents, chaque arête entre deux sommets correspondant à la présence d'au moins un lien de type hypertexte entre les deux documents correspondant aux deux sommets considérés.

Dans l'exemple considéré ici, le graphe représentant l'ensemble de documents est un graphe non orienté. Dans une telle représentation, on attache autant d'importance à une page qui pointe sur beaucoup de pages qu'à une page qui est pointée par de nombreuses de pages. Une page qui pointe sur de nombreuses de pages permet d'accéder à ces diverses pages, et elle est donc intéressante à ce titre.

L'invention repose sur le fait que les membres d'une communauté thématique du Web ont des pages qui pointent essentiellement vers les pages des autres membres de la communauté. Ce fait induit certaines propriétés topologiques du graphe G constitué, d'une part, des pages pour ce qui est des sommets, et d'autre part, des liens entre pages pour ce qui est des arêtes.

En particulier, on peut affirmer que le voisinage des sommets représentant les pages d'une communauté est essentiellement constitué de sommets situés à l'intérieur de la communauté. Cette observation conduit à rechercher des mineurs du graphe du Web tels que le voisinage des sommets constituant ces mineurs est le moins perturbé possible par les opérations permettant de former ces mineurs.

Afin de mesurer la perturbation du voisinage des sommets du graphe G=(V,E) engendrée par la génération d'un mineur $M_G$=(V',E') de G, on définit une distance entre ledit graphe G et ledit mineur $M_G$.

Cette distance est par exemple la somme des distances de Hamming des vecteurs caractéristiques du voisinage des sommets dans le graphe G=(V,E) et dans un mineur $M_G$=(V,E'). Cette distance permet de mesurer la perturbation du voisinage de ce sommet par les opérations de construction du mineur. Elle est notée $H(G,M_G)$ et est définie par la relation suivante:

$$H(G,M_G) = \sum_{u \in V'} \left| A_G(u) - A_{M_G}(u) \right| = \sum_{u \in V'} \sum_{v \in V} \left| A_G(u,v) - A_{M_G}(u,v) \right|$$

où $A_{MG}$ est la matrice d'adjacence du mineur $M_G$=(V',E') de même dimension que la matrice d'adjacence $A_G$ de G.

Le procédé selon l'invention consiste donc à déterminer à partir du graphe G=(V,E) de départ le mineur $M_G$ d'ordre N donné (comportant N sommets) tel que la distance $H(G,M_G)$ soit minimale.

Il est possible de démontrer que le temps de calcul nécessaire à la détermination du mineur $M_G$ pour lequel le minimum de la fonction est atteint croît de manière exponentielle avec la taille du graphe G de départ. Etant donné la grande taille des graphes représentant le Web ou un sous-ensemble du Web, la détermination exacte du minimum de la fonction n'est pas envisageable. On utilise donc une heuristique pour approcher au mieux ce minimum.

Cette heuristique consiste à effectuer la recherche de minimum, non pas sur le graphe G en entier, mais sur un mineur du graphe G (dit mineur initial et noté $M_0$), et à choisir ce mineur initial $M_0$ de manière à ce qu'il soit favorable à la détermination d'un mineur final $M_G$ minimisant la distance $H(G,M_G)$.

On peut constater que, si un sommet u du graphe G=(V,E) est excentré par rapport aux autres, c'est-à-dire si les chemins le reliant aux autres sommets sont assez longs, alors il n'est le voisin que d'un petit nombre de sommets parmi ceux de V — {u} (ensemble des sommets V moins le sommet u).

Aussi la suppression du sommet u du graphe G ne perturbe le voisinage que d'un petit nombre de sommets. Le mineur initial $M_0$ obtenu par sa suppression d'un tel sommet est donc un bon mineur du point de vue de la minimisation de la distance $H(G,M_G)$.

On peut remarquer que les paires de sommets pour lesquelles le diamètre du graphe est atteint sont des paires de sommets excentrés. On recherche de tels sommets en employant l'algorithme de Floyd-Warshall. La $p^{ème}$ itération (p entier) de cet algorithme donne l'ensemble des plus courts chemins comportant au plus p arêtes.

Afin de supprimer plusieurs sommets simultanément, on recherche tous les sommets qui sont reliés à un petit nombre de sommets après p itérations de l'algorithme de Floyd-Warshall. De préférence, p est proche de la moitié du diamètre du graphe G. Cela revient à supprimer les sommets du graphe G ayant un petit nombre de '1' dans la ligne correspondante de la matrice d'adjacence $A_G$. En conséquence, on obtient le mineur initial $M_0$ par suppression dans le graphe G des sommets ayant un nombre de voisins $|A_G(v)|$ inférieur à un seuil $\alpha$ prédéfini.

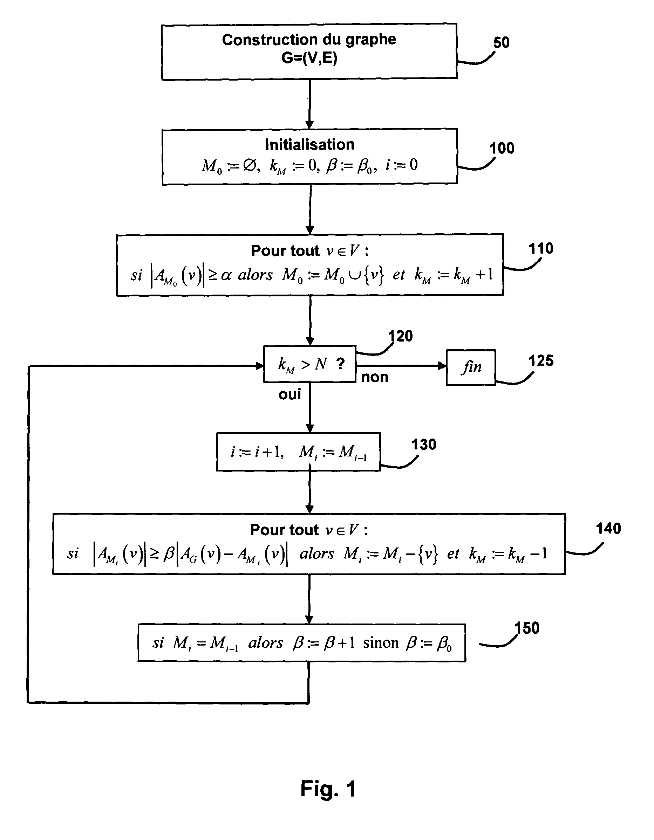

Les différentes étapes de la procédure de génération de mineur selon l'invention sont maintenant décrites par référence à la figure 1.

L'étape 50 consiste à constituer un graphe G représentant l'ensemble de documents pour lequel on veut déterminer des sous-ensembles de documents. Dans ce graphe chaque sommet du graphe correspond à un des documents de l'ensemble de documents, la présence d'une arête entre deux sommets du graphe indiquant la présence d'au moins un lien hypertexte entre les deux documents correspondant aux deux sommets considérés.

L'étape 100 consiste à initialiser les différents paramètres utilisés dans le traitement du graphe G.

L'étape 110 consiste à supprimer dudit graphe G les sommets ayant un nombre de voisins $|A_G(v)|$ inférieur à un seuil $\alpha$ prédéfini. On obtient ainsi le mineur initial $M_0$. Le mineur initial est donc constitué des sommets ayant un nombre de voisins $|A_G(v)|$ supérieur au seuil $\alpha$.

De préférence, la valeur du seuil $\alpha$ est ajustée en fonction du diamètre du graphe G de départ. Elle est par exemple choisie égale à la moitié du diamètre du graphe G.

Les étapes 120 à 150 suivantes correspondent à un processus itératif appliqué au mineur initial $M_0$.

Chaque itération consiste à générer un mineur $M_{i+1}$ du mineur courant $M_i$ par suppression dans le mineur courant $M_i$ d'au moins un sommet v répondant à un critère prédéfini comparant son voisinage dans le mineur courant $M_I$ et son voisinage dans le graphe de départ G. Ce processus itératif prend fin lorsque le nombre $k_M$ de sommets du mineur courant $M_i$ devient inférieur ou égal à N.

L'étape 120 consiste à déterminer si le mineur courant $M_i$ possède un nombre $k_M$ de sommets inférieur ou égal à N. Dans l'affirmative le processus itératif se termine à l'étape 125. Dans la négative, on exécute les étapes 130 à 150 suivantes consistant à générer un mineur $M_{i+1}$ à partir du mineur courant $M_i$.

L'étape 130 consiste à incrémenter l'indice i du mineur courant, le mineur courant étant celui généré à l'étape 120 précédente.

L'étape 140 consiste à supprimer du mineur courant $M_I$ tout sommet v tel que le vecteur caractéristique $A_{Mi}$ (v) du voisinage du sommet v dans le mineur courant $M_i$ et le vecteur caractéristique $A_G(v)$ du voisinage du sommet v dans le graphe de départ G vérifie la relation suivante:

$$\left|A_{M_i}(v)\right| \leq \beta \left|A_G(v) - A_{M_i}(v)\right| \qquad (1)$$

où $\beta$ est un paramètre de convergence.

La valeur du paramètre de convergence $\beta$ est ajustée à une valeur initiale prédéfinie $\beta_0$ avant l'exécution du processus itératif. Cette initialisation est effectuée par exemple lors de l'exécution de l'étape 100. La valeur initiale $\beta_0$ est par exemple choisie égale à 1.

De cette valeur du paramètre de convergence $\beta$ va dépendre la vitesse avec laquelle la procédure de génération de mineur va se terminer. En effet, plus la valeur du paramètre de convergence $\beta$ augmente, plus nombreux seront les sommets v vérifiant la relation (1), plus rapide sera la convergence de la procédure de génération de mineur, mais meilleure sera l'approximation obtenue dans la recherche du minimum.

A contrario si la valeur de β diminue, la convergence est ralentie et peut être même arrêtée si aucun sommet no vérifie la relation (1). Un équilibre est donc à trouver pour l'ajustement de ce paramètre. Avantageusement, la valeur de ce paramètre est réajustée en cours de procédure de génération de mineur.

Ainsi, l'étape 150 consiste à ajuster la valeur du paramètre de convergence β. Cette valeur est réajustée après une itération si cette itération n'a pas abouti à la modification du mineur courant $M_i$ et si le nombre N prédéfini de sommets n'est pas atteint pour le mineur courant $M_i$. Ce réajustement consiste par exemple à incrémenter de 1 la valeur du paramètre de convergence β. La valeur du paramètre de convergence β est réinitialisée à sa valeur initiale $β_0$ après une itération si cette itération a abouti à la modification du mineur courant $M_i$.

Les figures 2a à 2d représentent des exemples de graphes. Ces graphes correspondent respectivement:

- figure 2a : à un exemple de graphe de départ G;
- figure 2b : au mineur initial $M_0$ obtenu à partir du graphe G de la figure 2a par application de l'étape 110;
- figure 2c : au mineur suivant $M_1$ obtenu à partir du mineur initial $M_0$ de la figure 2b par application d'une itération 120 à 150;

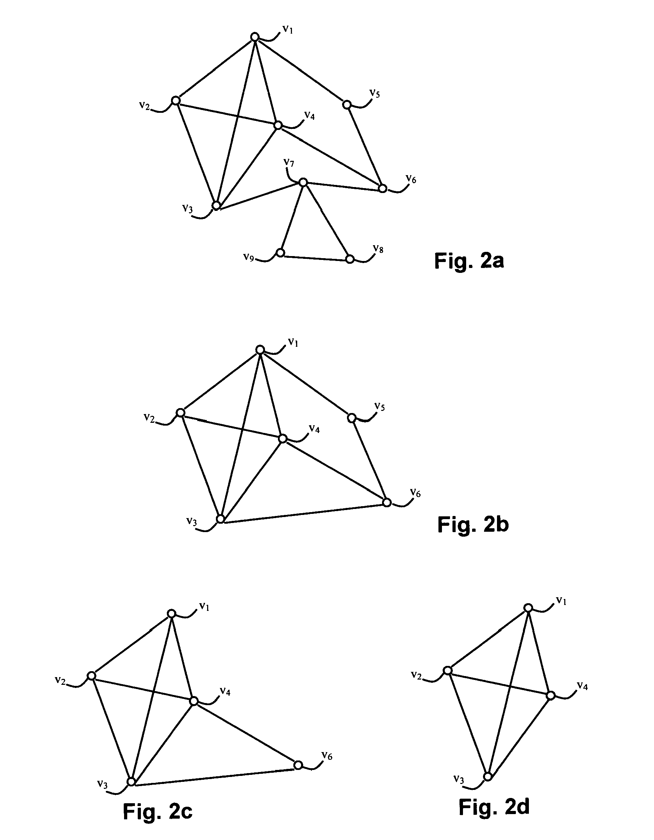

- figure 2d : au mineur final $M_G=M_2$ obtenu à partir du mineur $M_1$ de la figure 2c par application d'une nouvelle itération 120 à 150.

On constate sur la figure 2d que les sommets v1, v2, v3 et v4 du graphe de départ G de la figure 2a ont été retenus dans le mineur final. Cet ensemble de sommets correspond à un sous-ensemble de sommets fortement liés entre eux dans le graphe de départ de la figure 2a. Ils constituent une communauté dans l'ensemble des sommets du graphe G. Dans une telle communauté, les sommets pointent les uns sur les autres. Une telle structure d'arêtes dans un graphe représentant des documents traduit généralement la présence d'un lien thématique ou de contenu entre les documents associés à ces sommets. La procédure de génération de mineur conserve une telle structure.

La procédure de génération de mineur qui vient d'être décrite est une heuristique permettant d'approcher au mieux, et avec un temps de calcul raisonnable malgré la taille des graphes à traiter, le minimum de la distance de Hamming. Le procédé selon l'invention permet un équilibre judicieux entre la qualité de l'approximation obtenue et la puissance ou le temps de calcul nécessaire.

Cette procédure de génération de mineur utilise la distance de Hamming définie plus haut. Toutefois, une autre distance peut être utilisée pour la mise en oeuvre de l'invention. Par exemple, on peut mesurer la distance entre deux graphes par la somme de la différence des valeurs propres des Laplaciens de ces graphes. Le critère défini par la relation (1) plus haut et utilisé pour la sélection des sommets à supprimer, est de préférence chaque fois adapté à la distance choisie.

Afin d'identifier les différentes communautés présentes dans le graphe du Web considéré, la procédure de génération de mineur qui vient d'être décrite peut être appliquée de manière itérative, de façon à ce que, au final, tout sommet appartenant au graphe G appartienne aussi à au moins un mineur.

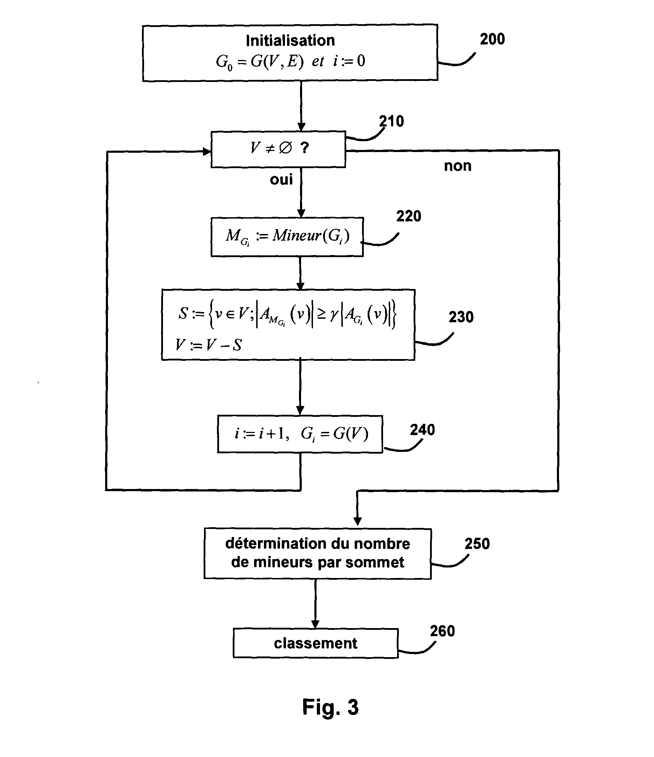

Cette procédure de recouvrement des sommets du graphe G par des mineurs est décrite ci-dessous en référence à la figure 3.

L'étape 200 consiste à initialiser les différents paramètres utilisés dans le traitement du graphe G.

Les étapes 210 à 240 suivantes correspondent à un processus itératif appliqué au graphe G.

Chaque itération consiste ici à générer un graphe $G_{i+1}$ à partir du graphe courant $G_i$ par suppression dans le graphe courant $G_i$ de tout sommet qui appartient au mineur $M_{Gi}$ obtenu par l'application de la procédure de génération de mineur au graphe $G_i$, et qui répond à un critère prédéfini concernant son voisinage dans ce mineur $M_I$. Le processus itératif prend fin lorsque le graphe courant $G_i$ est vide.

L'étape 210 consiste à déterminer si le graphe courant $M_i$ est vide. Dans l'affirmative le processus itératif se termine et le procédé se poursuit à l'étape 250. Dans la négative, on exécute les étapes 220 à 240 suivantes consistant à générer le graphe $G_{i+1}$ à partir du graphe courant $G_i$.

L'étape 220 consiste à appliquer la procédure "mineur" au graphe $G_i$ pour obtenir le mineur $M_{Gi}$.

L'étape 230 consiste à supprimer du graphe courant $G_i$ tout sommet v dont le vecteur caractéristique $A_{MGi}(v)$ du voisinage du sommet v dans le mineur $M_{Gi}$ et le vecteur caractéristique $A_{Gi}(v)$ des voisins du sommet v dans le graphe $G_i$, vérifient la relation suivante:

$$\left| A_{M_{G_i}}(v) \right| \le \gamma \left| A_{G_i}(v) \right| \quad (2)$$

où γ est un coefficient réel prédéfini compris entre 0 et 1, par exemple égal à 0,5.

L'étape 240 consiste à incrémenter l'indice i du mineur courant, le graphe courant étant le graphe $G_{I+1}$.

On détermine enfin, pour chaque mineur $M_{Gi}$ obtenu, le sous-ensemble dudit ensemble de documents correspondant aux sommets de ce mineur.

On peut remarquer que la suite des mineurs $M_{Gi}$ ne réalise pas une partition, au sens mathématique, de l'ensemble des sommets du graphe G, mais que la réunion des ensembles de sommets des mineurs $M_{Gi}$ est égale à l'ensemble des sommets du graphe G. Ainsi chaque sommet de G appartient à un ou plusieurs mineurs. Les étapes 250 et 260 suivantes tirent profit de cette propriété.

L'étape 250 consiste à déterminer pour chaque sommet du graphe G le nombre de mineurs $M_{Gi}$ auxquels il appartient.

L'étape 260 consiste à effectuer un classement dudit ensemble de documents en fonction du nombre de mineurs déterminé pour le sommet correspondant à chaque document. Plus ce nombre de communautés est faible, plus le document associé est caractéristique de ces communautés et donc pertinent vis-à-vis de ces communautés.

Le résultat du classement en communauté ou du classement par rang est affiché sur un écran d'affichage du dispositif selon l'invention. Le dispositif selon l'invention comprend de préférence une interface utilisateur appropriée permettant à l'utilisateur de sélectionner un ou plusieurs documents susceptibles de l'intéresser au vu du classement présenté et de visualiser le contenu de ces documents.

On dispose, de par le procédé selon l'invention, d'une méthode de classification de pages Web adaptée pour faire apparaître des communautés ou sous-ensembles au sein d'un ensemble de pages.

La méthode exposée ici construit les différents sous-ensembles à partir des propriétés topologiques du graphe représentant l'ensemble des pages. Elle procède par suppression de sommets, rejetant les sommets dont on juge qu'ils ne peuvent pas appartenir à un certain sous-graphe. Elle est peu consommatrice de puissance de calcul du fait d'une faible complexité et peut donc s'appliquer à des ensembles de documents de grande taille.

Selon une implémentation préférée, les étapes du procédé de classification de documents électroniques, selon l'invention, sont déterminées par des instructions d'un programme d'ordinateur.

On entend ici par "programme d'ordinateur" un ou plusieurs programmes d'ordinateur formant un ensemble (logiciel) dont la finalité est la mise en oeuvre de l'invention lorsqu'il est exécuté par un système informatique approprié.

Le procédé selon l'invention est alors mis en oeuvre lorsque le programme précité est chargé dans des moyens informatiques incorporés, par exemple, dans un terminal utilisateur relié à un réseau de type Internet et équipé d'un logiciel de navigation Internet.

En conséquence, l'invention a également pour objet un tel programme d'ordinateur, en particulier sous la forme d'un logiciel stocké sur un support d'informations. Un tel support d'informations peut être constitué par n'importe quelle entité ou dispositif capable de stocker un programme selon l'invention.

Par exemple, le support en question peut comporter un moyen de stockage matériel, tel qu'une ROM, par exemple un CD ROM ou une ROM de circuit microélectronique, ou encore un moyen d'enregistrement magnétique, par exemple un disque dur. En variante, le support d'informations peut être un circuit intégré dans lequel le programme est incorporé, le circuit étant adapté pour exécuter ou pour être utilisé dans l'exécution du procédé en question.

D'autre part, le support d'informations peut être aussi un support immatériel transmissible, tel qu'un signal électrique ou optique pouvant être acheminé via un câble électrique ou optique, par radio ou par d'autres moyens. Un programme selon l'invention peut être en particulier téléchargé sur un réseau de type Internet.

D'un point de vue conception, un programme d'ordinateur selon l'invention peut utiliser n'importe quel langage de programmation et être sous la forme de code source, code objet, ou de code intermédiaire entre code source et code objet (par ex., une forme partiellement compilée), ou dans n'importe quelle autre forme souhaitable pour implémenter un procédé selon l'invention.

## Revendications

**1.** Procédé de classement informatique d'un ensemble de documents électroniques du type pouvant contenir des liens hypertextes vers d'autres documents électroniques, le procédé étant mis en oeuvre par des moyens informatiques et **caractérisé en qu'**il comprend les étapes consistant à :

   a) analyser l'ensemble des documents électroniques afin de détecter la présence de liens hypertexte et de constituer (50) un graphe G représentant ledit ensemble de documents, chaque sommet du graphe correspondant à un des documents dudit ensemble, la présence d'une arête entre deux sommets du graphe indiquant la présence d'au moins un lien hypertexte entre les deux documents correspondant auxdits deux sommets ;
   b) obtenir (220) un mineur $M_G$ du graphe G comprenant un nombre maximal prédéfini N de sommets par suppression d'au moins un sommet du graphe G, ladite suppression visant à minimiser pour ledit nombre prédéfini N de sommets une distance prédéfinie entre ledit graphe G et ledit mineur $M_G$, ladite distance mesurant la perturbation du voisinage des sommets du graphe G engendrée par la génération du mineur $M_G$.
   c) déterminer le sous-ensemble dudit ensemble de documents, qui correspond aux sommets du mineur $M_G$

obtenu.

**2.** Procédé selon la revendication 1, dans lequel l'étape b) inclut une étape de traitement du graphe G par un processus itératif (120-150), chaque itération consistant à générer un mineur $M_{I+1}$ du mineur courant $M_i$ par suppression dans le mineur courant $M_i$ d'au moins un sommet v satisfaisant à un critère prédéfini relatif à la comparaison de son voisinage dans le mineur courant $M_i$ et de son voisinage dans le graphe de départ G, le processus itératif prenant fin lorsque le nombre de sommets du mineur courant $M_i$ devient inférieur ou égal à N.

**3.** Procédé selon la revendication 2, dans lequel ledit critère est satisfait pour un sommet v donné si le vecteur caractéristique $A_{MI}(v)$ du voisinage du sommet v dans le mineur courant $M_i$ et le vecteur caractéristique $A_G(v)$ du voisinage du sommet v dans le graphe de départ G, vérifient la relation suivante :

$$\left| A_{M_i}(v) \right| \leq \beta \left| A_G(v) - A_{M_i}(v) \right|$$

où $\beta$ est un paramètre de convergence.

**4.** Procédé selon la revendication 3, dans lequel :

- la valeur du paramètre de convergence $\beta$ est ajustée à une valeur initiale prédéfinie $\beta_0$ avant l'exécution du processus itératif de l'étape b),
- la valeur du paramètre de convergence $\beta$ est réajustée après une itération si cette itération n'a pas abouti à la modification du mineur courant $M_i$ et si le nombre N prédéfini de sommets n'est pas atteint pour le mineur courant $M_i$,
- la valeur du paramètre de convergence $\beta$ est réinitialisée à sa valeur initiale $\beta_0$ après une itération si cette itération a abouti à la modification du mineur courant $M_i$.

**5.** Procédé selon l'urle quelconque des revendications 2 à 4, dans lequel ledit processus itératif est appliqué au graphe G après exécution d'une étape consistant à supprimer du graphe G les sommets ayant un nombre de voisins inférieur à un seuil $\alpha$ prédéfini.

**6.** Procédé selon l'une quelconque des revendications 1 à 5, dans lequel ladite distance prédéfinie est la somme, sur le graphe des distances de Hamming, des vecteurs caractéristiques du voisinage des sommets qui composent le mineur $M_G$ lorsque ledit voisinage est considéré dans le graphe G.

**7.** Procédé selon l'une quelconque des revendications 1 à 5, dans lequel ladite distance prédéfinie est la somme de la différence des valeurs propres des Laplaciens du graphe G et du mineur $M_G$.

**8.** Procédé selon l'une quelconque des revendications 1 à 7, comprenant en outre les étapes consistant à :

- traiter le graphe G par un deuxième processus itératif (210-240), chaque itération consistant à générer un graphe $G_{i+1}$ à partir du graphe courant $G_i$, par suppression dans le graphe courant $G_i$ de tout sommet qui appartient au mineur $M_{Gi}$, obtenu par application (220) de l'étape b) au graphe G;, et qui satisfait à un deuxième critère prédéfini concernant son voisinage dans ce mineur $M_i$, ledit deuxième processus itératif prenant fin lorsque le graphe courant $G_i$ est vide ; et
- déterminer, pour chaque mineur $M_{Gi}$ obtenu, le sous-ensemble dudit ensemble de documents correspondant aux sommets de ce mineur.

**9.** Procédé selon la revendication 8, incluant les étapes consistant à :

- déterminer pour chaque sommet le nombre de mineurs $M_{Gi}$ auquel il appartient ; et
- effectuer un classement dudit ensemble de documents, le rang de classement d'un document étant fonction du nombre de mineurs obtenus comprenant le sommet correspondant au document considéré.

**10.** Procédé selon l'une quelconque des revendications 8 à 9, dans lequel ledit deuxième critère est vérifié pour un sommet v donné si le vecteur caractéristique $A_{MGi}(v)$ du voisinage du sommet v dans le mineur $M_{Gi}$ et le vecteur caractéristique $A_{Gi}(v)$ des voisins du sommet v dans le graphe $G_i$, vérifient la relation suivante :

$$\left| A_{M_{G_i}}(v) \right| \leq \gamma \left| A_{G_i}(v) \right|$$

où $\gamma$ est un coefficient réel prédéfini compris entre 0 et 1.

**11.** Programme d'ordinateur sur un support d'informations, ledit programme contenant des instructions adaptées à la mise en oeuvre des étapes d'un procédé selon l'une quelconque des revendications précédentes, lorsque ledit programme est exécuté sur un ordinateur.

**12.** Dispositif informatique pour le classement d'un ensemble de documents électroniques du type pouvant contenir des liens hypertextes vers d'autres documents électroniques, le dispositif comprenant:

    a) des moyens pour analyser l'ensemble des documents afin de détecter la présence de liens hypertexte et de constituer (50) un graphe G représentant ledit ensemble de documents, chaque sommet du graphe correspondant à un des documents dudit ensemble, la présence d'une arête entre deux sommets du graphe indiquant la présence d'au moins un lien hypertexte entre les deux documents correspondant auxdits deux sommets ;
    b) des moyens pour obtenir (220) un mineur $M_G$ du graphe G comprenant un nombre maximal prédéfini N de sommets par suppression d'au moins un sommet du graphe G, ladite suppression visant à minimiser pour ledit nombre prédéfini N de sommets une distance prédéfinie entre ledit graphe G et ledit mineur $M_G$, ladite distance mesurant la perturbation du voisinage des sommets du graphe G engendrée par la génération du mineur $M_G$,
    c) des moyens pour déterminer le sous-ensemble dudit ensemble de documents, qui correspond aux sommets du mineur $M_G$ obtenu.

**13.** Dispositif selon la revendication 12, **caractérisé en ce qu'**il comprend des moyens pour la mise en oeuvre d'un procédé selon l'une quelconque des revendications 1 à 10.

Construction du graphe
G=(V,E)

**50**

Initialisation
$M_0 := \varnothing, \quad k_M := 0, \quad \beta := \beta_0, \quad i := 0$

**100**

**Pour tout** $v \in V$ :
$si \quad \left| A_{M_0}(v) \right| \geq \alpha \ alors \ M_0 := M_0 \cup \{v\} \ et \ k_M := k_M + 1$

**110**

$k_M > N$ ?

**120**

**non** → *fin*  **125**

**oui**

$i := i+1, \quad M_i := M_{i-1}$

**130**

**Pour tout** $v \in V$ :
$si \quad \left| A_{M_i}(v) \right| \geq \beta \left| A_G(v) - A_{M_i}(v) \right| \ alors \ M_i := M_i - \{v\} \ et \ k_M := k_M - 1$

**140**

$si \ M_i = M_{i-1} \ alors \ \beta := \beta+1 \ sinon \ \beta := \beta_0$

**150**

**Fig. 1**

Fig. 2a

Fig. 2b

Fig. 2c

Fig. 2d

Initialisation
$G_0 = G(V,E)$ *et* $i := 0$ **200**

$V \neq \varnothing$ ? **210**

**oui** **non**

$M_{G_i} := Mineur(G_i)$ **220**

$S := \left\{ v \in V; \left| A_{M_{G_i}}(v) \right| \geq \gamma \left| A_{G_i}(v) \right| \right\}$
$V := V - S$ **230**

$i := i+1, \quad G_i = G(V)$ **240**

détermination du nombre
de mineurs par sommet **250**

classement **260**

# Fig. 3

**Office européen des brevets**

## RAPPORT DE RECHERCHE EUROPEENNE

Numéro de la demande

EP 06 29 1193

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | XIAOHUA HU ET AL: "Discovering cyber communities from the WWW" PROCEEDINGS OF THE 27TH. ANNUAL INTERNATIONAL COMPUTER SOFTWARE AND APPLICATIONS CONFERENCE. COMPSAC 2003. DALLAS, TX, NOV. 3 - 6, 2003, ANNUAL INTERNATIONAL COMPUTER SOFTWARE AND APPLICATIONS CONFERENCE, LOS ALAMITOS, CA, IEEE COMP. SOC, US, vol. CONF. 26, 3 novembre 2003 (2003-11-03), pages 597-601, XP010669673 ISBN: 0-7695-2020-0 * abrégé * * page 600, colonne de droite * ----- | 1,2,5,8, 11-13 | INV. G06F17/30 |
| A | KUMAR R ET AL: "Trawling the Web for emerging cyber-communities" COMPUTER NETWORKS, ELSEVIER SCIENCE PUBLISHERS B.V., AMSTERDAM, NL, vol. 31, no. 11-16, 17 mai 1999 (1999-05-17), pages 1481-1493, XP004304568 ISSN: 1389-1286 * page 1484, colonne de gauche * ----- -/-- | 1-13 | |

**DOMAINES TECHNIQUES RECHERCHES (IPC)**

G06F

Le présent rapport a été établi pour toutes les revendications

| Lieu de la recherche | Date d'achèvement de la recherche | Examinateur |
|---|---|---|
| Munich | 16 octobre 2006 | Michalski, Stéphane |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................................
& : membre de la même famille, document correspondant

EPO FORM 1503 03.82 (P04C02)

**Office européen des brevets**

**RAPPORT DE RECHERCHE EUROPEENNE**

Numéro de la demande

EP 06 29 1193

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | KRISHNAMURTHY V ET AL: "Reducing large Internet topologies for faster simulations" NETWORKING 2005. NETWORKING TECHNOLOGIES, SERVICES, AND PROTOCOLS; PERFORMANCE OF COMPUTER AND COMMUNICATION NETWORKS; MOBILE AND WIRELESS COMMUNICATION SYSTEMS, [Online] 6 mai 2005 (2005-05-06), pages 328-341, XP002376206 4th International IFIP-TC6 Networking Conference. Proceedings (Lecture Notes in Computer Science Vol. 3462) Springer-Verlag Berlin, Germany ISBN: 3-540-25809-4 Extrait de l'Internet: URL:http://www.springerlink.com/openurl.asp?genre=article&id=doi:10.1007/11422778_27> [extrait le 2006-04-07] * page 332 * ----- | 1-13 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| Munich | 16 octobre 2006 | Michalski, Stéphane |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

 

& : membre de la même famille, document correspondant

EPO FORM 1503 03.82 (P04C02)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- The PageRank Citation Ranking : Bringing Order on the Web. **L. PAGE ; S. BRIN ; R. MOTWANI ; T. WINOGRAD.** Technical Report. Computer Science Département, 1998